# FASCICULE DE BREVET EUROPEEN

(11) **EP 4 085 349 B1**
(45) Date de publication et mention de la délivrance du brevet: **26.02.2025**
(21) Numéro de dépôt: 20838585.6
(22) Date de dépôt: 31.12.2020
(51) Int. Cl.: G06F 16/901

(54) **PROCÉDÉ D'INTERROGATION D'UNE BASE DE DONNÉES ORGANISÉE COMME UN GRAPHE DE CONNAISSANCES**
VERFAHREN ZUR ABFRAGE EINER IN FORM EINES WISSENSDIAGRAMMS ORGANISIERTEN DATENBANK
METHOD FOR INTERROGATING A DATABASE ORGANIZED INTO A KNOWLEDGE GRAPH

(30) Priorité: 31.12.2019 FR 1915769
(43) Date de publication de la demande: 09.11.2022
(73) Titulaire: Anamnèse, 91120 Palaiseau (FR)
(72) Inventeur: CANYASSE, Raphaël, 75009 Paris (FR); DUFUMIER, Benoit, 91300 Massy (FR)
(74) Mandataire: Cabinet Camus Lebkiri
(86) Numéro de dépôt international: PCT/EP2020/088069
(87) Numéro de publication internationale: WO 2021/136826

(56) Documents cités:
- EP-A1- 3 561 689
- US-A1- 2014 351 261
- US-A1- 2019 121 801

## Description

### DOMAINE TECHNIQUE DE L'INVENTION

Le domaine technique de l'invention est celui des graphes de connaissances.

La présente invention concerne un procédé d'interrogation d'une base de données organisée comme un graphe de connaissances.

### ARRIÈRE-PLAN TECHNOLOGIQUE DE L'INVENTION

Dans l'état de la technique les applications ayant besoin d'extraire le plus d'informations possible d'une base de données en fonction d'hypothèses prédéterminées utilisent différentes stratégies.

Ces stratégies sont principalement le recours à un arbre de connaissances ou à un moteur d'inférence. Ici, par arbre de connaissances on parle de connaissances organisées comme un arbre. Les connaissances sont les feuilles de l'arbre. Chaque nœud de l'arbre correspond à une mesure à effectuer pour progresser dans le parcours de l'arbre. Le résultat de la mesure détermine le nœud suivant lors du parcours.

L'inconvénient de ces stratégies est qu'elles sont très rigides. Par exemple, dans le cas d'un arbre de connaissances, le parcours se fait du sommet de l'arbre vers le bas de l'arbre. Une fois le parcours engagé dans une branche, toutes les branches commençant à un nœud de même niveau deviennent indisponibles.

Donc, si une connaissance doit apparaître dans plusieurs cas, chaque cas correspondant à un chemin dans l'arbre de connaissance, alors cette connaissance doit, d'une manière ou d'une autre, correspondre à plusieurs feuilles. On peut rapidement aboutir à des arbres de très grandes dimensions aussi bien en profondeur qu'en largeur.

L'inconvénient des moteurs d'inférences est qu'ils travaillent sur une base de règles que l'on applique à un jeu d'hypothèses. Ils ne sont donc pas naturellement interactifs.

Ces deux stratégies sont de plus adaptées pour effectuer une classification. Ici par classification on entend le fait de déterminer la feuille, donc la connaissance, qui correspond le mieux aux mesures effectuées. On détermine la meilleure classe, parmi des classes connues, qui correspond aux mesures. Ces stratégies aboutissent donc à mettre en valeur une connaissance et à masquer les autres.

A l'usage, il apparaît également que les structures de données associées à ces stratégies, ainsi que les matérialisations de ces structures de données, ont une complexité qui va bien au-delà de la complexité logique des données traitées. Cela implique une difficulté accrue de maintenance pour les données et les programmes qui les traitent. Par maintenance, on entend au moins une mise au point et une évolution.

Cette complexité rend aussi plus difficile l'appropriation du modèle de données par les hommes du métier du domaine des connaissances enregistrées dans la structure de données.

Ces remarques sont particulièrement vraies dans le domaine médical et encore plus spécifiquement dans le domaine de l'anamnèse. Dans ces cas on a besoin de spécialistes pour décrire les données métiers, et ils ne les hiérarchisent pas. L'application des stratégies standard aboutit donc à des résultats partiels ou très difficiles à mettre à jour si possible à implémenter.

Cela est lié au fait que, dans les solutions de l'état de la technique, on observe une fusion entre la connaissance et le procédé. C'est-à-dire que le parcours de la connaissance est contraint par la structure en arbre. Le mode de parcours se confond avec la connaissance et en devient une partie.

L'état de la technique est illustré par US 2014/351261 A1, avec les caractéristiques du préambule de la revendication1.

### RÉSUMÉ DE L'INVENTION

L'invention offre une solution aux problèmes évoqués précédemment, en permettant d'optimiser le parcours d'un graphe de connaissances, cette optimisation se faisant en minimisant le nombre et la complexité des requêtes à émettre vers un serveur de base de données pour parcourir ledit graphe. On minimise donc les interactions physiques entre un processus client et un processus serveur. Selon les configurations des machines mettant en œuvre lesdits processus cela permet donc, de consommer moins d'énergie et/ou d'accélérer le temps de réponse du système.

Un aspect de l'invention concerne un procédé mis en oeuvre par ordinateur de parcours d'une base de données organisée comme un graphe de connaissances pour mettre à jour dans une mémoire un état de connaissances, le graphe comportant une pluralité de nœuds et une pluralité de relations entres les nœuds de la pluralité de nœuds, le procédé comprenant les étapes suivantes:
- Un état de connaissances est un ensemble de paires [référence à un nœud, valeur] ;
- Au moins un nœud de la pluralité de nœuds comporte un identifiant et un attribut de navigation, ledit attribut de navigation étant structuré comme une liste d'ensembles de références à des nœuds, le procédé étant caractérisé en ce que: chaque ensemble de la liste étant associé à un premier coefficient, chaque nœud référencé étant associé à un deuxième coefficient, la sélection d'un nœud suivant à partir d'un nœud courant se faisant selon les étapes suivantes :
   - Mise à jour de l'état de connaissances par l'ajout d'une paire dans l'état de connaissances, ladite paire comprenant une référence du noeud courant et une valeur fonction d'une relation ayant permis d'aboutir au nœud courant ;
   - Pour chaque nœud voisin du nœud courant comportant un attribut de navigation, calcul d'un score de noeuds basé sur au moins un score d'ensemble, chaque score d'ensemble étant basé sur chaque deuxième coefficient associé à un noeud référencé et sur chaque valeur dans l'état de connaissances associée audit noeud référencé, chaque deuxième coefficient et chaque valeur étant considérée lorsque ledit noeud référencé est présent dans l'état de connaissances, chaque score d'ensemble étant pondéré par le premier coefficient dudit ensemble
   - Sélection, parmi tous les nœuds référencés par le nœud voisin ayant le score le plus élevé, du nœud qui n'est pas référencé par l'état de connaissances et qui a le deuxième coefficient le plus élevé.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Pour une référence de nœud les valeurs possibles appartiennent à un ensemble discret ;
- Un nœud comporte un attribut pondérant pris en compte dans le calcul du score du nœud ;
- La relation permettant d'aboutir au nœud courant est déterminée par les étapes suivantes :
   - Sélection d'une relation prédéterminée parmi des relations sortant du nœud courant pour aboutir à un nœud d'évaluation ;
   - Sélection d'une relation sortant du nœud d'évaluation et retournant vers le nœud courant en fonction d'une mesure ;
- La mesure est issue d'un capteur ;
- Le capteur est un dispositif de saisie ;
- La mesure est le résultat de l'évaluation d'une fonction de l'état de connaissances.

L'invention et ses différentes applications seront mieux comprises à la lecture de la description qui suit et à l'examen des figures qui l'accompagnent.

### BRÈVE DESCRIPTION DES FIGURES

Les figures sont présentées à titre indicatif et nullement limitatif de l'invention.
FIG.1 montre une illustration de moyens techniques pour la mise en œuvre du procédé selon l'invention.
FIG.2 montre une illustration de la structure d'un nœud dans une base de données orientées graphe pour la mise en œuvre du procédé selon l'invention.
FIG.3 montre une illustration de la structure d'un état de connaissances.
FIG.4 montre une illustration d'une structure de base de données orientée graphe qui permet d'arriver à un nœud courant.
FIG.5 montre une illustration d'étapes du procédé selon l'invention.

Sur les figures des éléments identiques ont les mêmes références.

### DESCRIPTION DETAILLEE

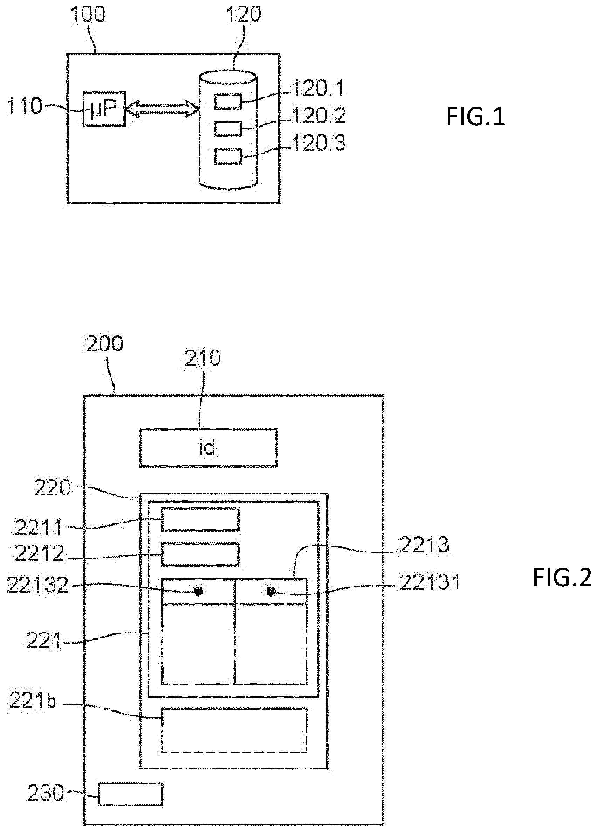

La figure 1 montre un dispositif 100 de traitement. Le dispositif 100 de traitement comporte :
- Un microprocesseur 110 ;
- Des moyens 120 de stockage.

Par moyens de stockage on entend ici représenter l'ensemble des moyens de stockage du dispositif de traitement. Cela inclut en particulier les mémoires de travail, de type mémoire transitoire, et les mémoires de persistance de type de non transitoire.

La figure 1 montre que les moyens de stockage du dispositif de traitement comportent plusieurs zones :
- Une zone 120.1 code instruction qui comporte des codes instructions pour la mise en œuvre du procédé selon l'invention ;
- Une zone 120.2 base de données orientée graphe. Une telle base de données est, par exemple, Neo4j (marque déposée) ou OrientDB ;
- Une zone 120.3 état de connaissances.

Dans cette description, lorsque l'on prête une action à un dispositif ou à un programme, cette action est réalisée pour un microprocesseur du dispositif mettant en œuvre des codes instructions chargés depuis des moyens de stockage du dispositif. S'il agit d'un programme alors ce programme, et les codes instructions correspondant, sont associés à un dispositif comportant un microprocesseur.

La figure 2 montre une représentation schématique d'une structure d'un premier nœud 200 de la base de données de la zone 120.2 base de données des moyens de stockage du dispositif de traitement. Dans la pratique un nœud est une zone mémoire structurée pour enregistrer des données. Chaque donnée enregistrée dans un nœud est un attribut de ce nœud. Les attributs sont nommés pour plus de clarté. Dans une base de données orientée graphe tous les nœuds n'ont pas forcément la même structure. Dans l'invention on a au moins la structure suivante pour le premier nœud 200 qui comporte :
- Un attribut 210 identifiant de nœud. Il s'agit d'un identifiant unique qui distingue le nœud parmi tous les nœuds de la base de données.
- Un attribut 220 de navigation structuré en double liste. C'est-à-dire que l'attribut 220 de navigation est une liste de liste.

La figure 2 montre que l'attribut 220 de navigation comporte au moins une première structure 221 de références. La structure est ainsi nommée car elle est structurée pour contenir des références à des nœuds. La structure 221 comporte :
- Un attribut 2211 titre des références ;
- Un attribut 2212 premier coefficient numérique valant pour l'ensemble de la structure ;
- Une table 2213 de références. Chaque ligne de la table de référence comporte un coefficient 22131 numérique propre et un identifiant 22132 de nœud. Cela permet d'établir un lien vers d'autres nœuds.

La figure 2 montre que l'attribut 220 de navigation peut contenir une pluralité de structure telle que celle précédemment décrite pour la première structure, par exemple une deuxième structure 221b structurée comme la première structure.

La figure 2 montre que, dans une variante de l'invention, le premier nœud 200 comporte un attribut 230 pondérant. Cet attribut est un coefficient numérique. Ce coefficient vaut pour le nœud.

Dans l'invention, il est intéressant de remarquer, que bien qu'utilisant une base de données orientée graphe, on définit des liens sans passer par le mécanisme des relations propre aux bases de données orientée graphe.

Cela permet, au moins, d'accélérer les interrogations de la base de données en agissant comme un cache de résultats de requêtes. Cela apparaîtra plus clairement lors de la description des étapes du procédé.

Dans la pratique une base de données orientée graphe permet d'établir des relations entre les nœuds. Pour l'invention on a au moins un type de relation qui peut être établie entre les nœuds ayant une structure identique à celle décrite pour le premier nœud 200. On obtient ainsi un graphe de nœuds, c'est-à-dire un ensemble de nœuds que l'on peut parcourir en suivant les relations qui les lient.

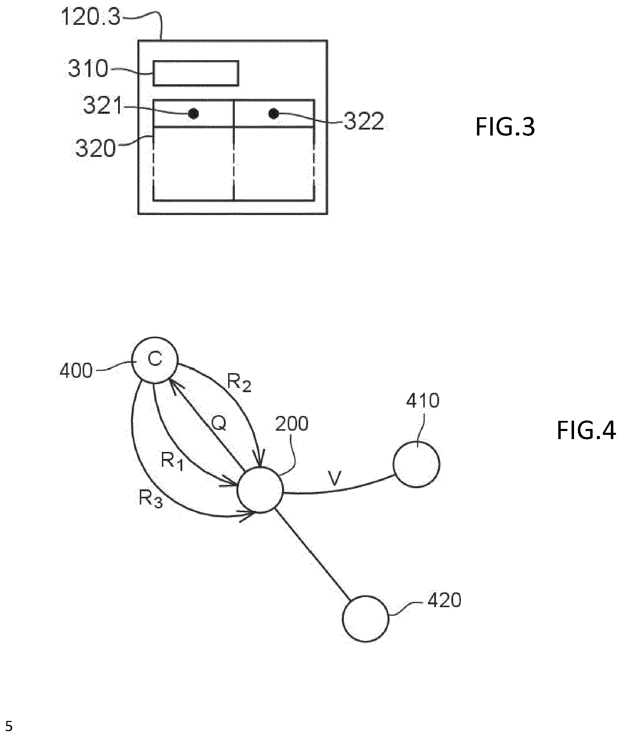

La figure 3 montre que la zone 120.3 état de connaissances est structurée comme suit :
- Un identifiant 310 de session ;
- Une table 320 d'état.

L'identifiant 310 permet de gérer plusieurs états de connaissance dans le cas de parcours simultanés de la base de données. Si la base de données, ou l'application qui l'utilise, est mono-utilisateur, et sans historisation, cet identifiant est superflu. On note ici que la représentation qui est donnée illustre le fait que la table est associée à un identifiant de session. La session elle-même peut être muette comme les sessions anonymes sur les sites Internet sans authentification. La session peut être associée à un utilisateur en cas d'authentification.

La figure 3 montre que la table 320 état peut être vue comme une table, chaque ligne de la table comportant :
- Un identifiant 321 de nœud ;
- Une valeur 322.

La valeur 322 est une valeur discrète. Dans une variante préférée, elle dépend d'une relation qui a permis d'aboutir au nœud identifié par l'identifiant 321 de nœud.

La figure 4 montre un deuxième nœud 400 d'évaluation. On pourrait aussi parler d'un nœud capteur. Une fois que l'on aboutit à ce nœud, on en sort en réalisant une évaluation ou une mesure décrite par le nœud. Une évaluation est, par exemple la réponse à une question, la lecture d'une mesure sur un capteur de température, la lecture d'une mesure sur un capteur de pression, la lecture d'une couleur sur une image, la lecture d'une mesure sur un sonomètre,... la liste n'est pas exhaustive. Le deuxième nœud 400 comporte donc un ou plusieurs attributs permettant de définir l'évaluation à réaliser.

La figure 4 montre qu'il existe une relation de type Q entre le premier nœud et le deuxième nœud. Ici Q est une étiquette arbitraire servant à prédéterminer un type.

La figure 4 montre trois relations R1, R2 et R3 de type R entre le deuxième nœud et le premier nœud. Chacune de ces trois relations est associée à une valeur. Cette association peut être réalisée d'au moins deux façons :
- Par un attribut de la relation ;
- Par un nœud intermédiaire entre le deuxième nœud et le premier nœud.

Dans le cas décrit à la figure 4, le résultat de l'évaluation, ou de la mesure, est donc compris dans un ensemble formé de trois valeurs. Il s'agit d'un ensemble discret.

Ces trois valeurs sont, par exemple dans le cas d'une question : Oui, Non, Je ne sais pas.

Il peut bien sur y avoir plus ou moins de valeurs dans l'ensemble discret. Un autre ensemble de réponse peut être : Supérieur à S, Inférieur à S. Dans ce cas S est un seuil lié à la nature du capteur.

Un autre ensemble discret peut être un ensemble de fréquences décrit comme suit : 1 fois par T, 3 fois par T, 5 fois par T, Plus. Ici T est une période prédéterminée, par exemple, une heure, douze heures ou vingt-quatre heure, un mois...

Via l'une des relations de type R on arrive donc au premier nœud en étant capable d'associer une valeur à l'identifiant du premier nœud. On peut donc mettre à jour l'état de connaissances.

La figure 4 montre un troisième nœud 410 voisin du premier nœud 200. Le troisième nœud a la même structure que le premier nœud. Le troisième nœud 410 est voisin du premier nœud 200 car il existe une relation de type V entre le premier nœud et le deuxième nœud. Le type V est un type prédéterminé qui permet de déterminer les voisins, selon l'invention, d'un nœud. Les voisins d'un nœud sont, par exemple, tous les nœuds qui ont une relation de type V avec ce nœud.

Dans une variante de l'invention les nœuds voisins sont les nœuds référencés par l'attribut de navigation du nœud courant.

Dans une variante de l'invention les nœuds voisins sont les nœuds NV0 correspondant à au moins l'une des définitions précédentes auxquels on ajoute les nœuds voisins, selon l'une au moins l'une des définitions précédentes, des nœuds NV0.

Dans d'autres variantes de l'invention les nœuds voisins correspondent à une union d'au moins deux des ensembles de nœuds voisin précédemment décrit.

La figure 4 montre un quatrième nœud 420 voisin du premier nœud.

Dans cette description on ne représente que deux nœuds voisins selon l'une des définitions possibles de « nœud voisin » mais l'invention s'applique quel que soit le nombre de nœuds voisins.

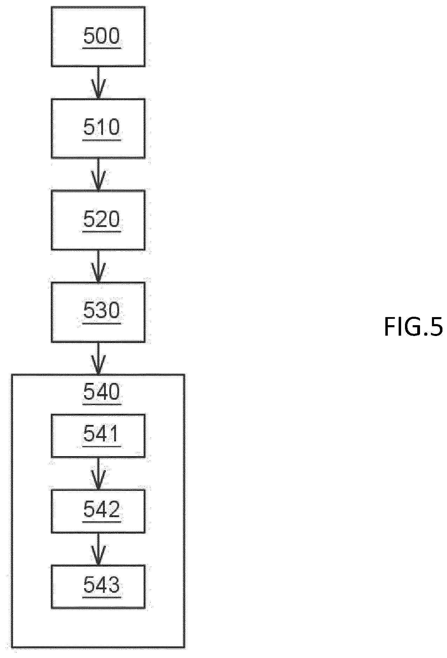

La figure 5 montre une étape 500 préliminaire dans laquelle le procédé selon l'invention aboutit au premier nœud 200. La manière dont le procédé aboutit au nœud 500 n'est pas importante ici. On peut y aboutir soit à la suite de la mise en œuvre d'une étape du procédé selon l'invention soit d'une autre manière. Une autre manière est par exemple un processus de sélection d'un premier nœud, y compris un processus aléatoire.

La figure 5 montre une étape 510 d'activation d'un capteur. Dans cette étape on recherche, parmi les relations établies par le premier nœud 200 une relation de type Q. Ici le type Q est un type prédéterminé. Par prédéterminé on entend un paramètre du procédé selon l'invention. Si une telle relation existe alors l'autre extrémité de la relation est un nœud capteur. Un nœud capteur décrit une mesure à réaliser par le procédé selon l'invention.

Par exemple, le deuxième nœud 400 capteur est une question à poser à un utilisateur. Le deuxième nœud comporte alors une question qui sera soumise à l'utilisateur. Le deuxième nœud établit également des relations de type R, type prédéterminé, avec le premier nœud. Ces relations de type R sont associées à des valeurs possibles de réponse. Il est donc possible de poser une question dont la réponse appartient à un ensemble fini de valeur.

Dans une étape 520, le procédé lit la valeur du capteur, c'est-à-dire la réponse choisie par l'utilisateur. Dans ce cas, le capteur est composé d'un écran pour afficher la question et d'un périphérique de saisie pour sélectionner la réponse. Selon la réponse sélectionnée par l'utilisateur le procédé retourne au premier nœud par l'une des relations de type R. Le capteur est donc un dispositif de saisie.

Dans une variante, le capteur peut aussi être tel que la mesure est le résultat de l'évaluation d'une fonction de l'état de connaissances, c'est-à-dire que le capteur est une fonction de l'état de connaissances qui renvoie une valeur discrète en fonction de cet état de connaissances. On rappelle ici que le nombre de lignes dans la table 320 est une caractéristique de l'état de connaissances.

Dans le cas d'une application client-serveur, il est entendu que le capteur, vu par le dispositif, qui est considéré comme le serveur, mettant en œuvre le procédé est assimilé à un échange de messages :
- Un message émis pour définir le capteur au niveau du client ;
- Un message reçu comme résultat de la lecture.

Dans une étape 530, on utilise le résultat de la lecture du capteur pour mettre à jour l'état 120.3 de connaissances.

La mise à jour de l'état de connaissances se fait par l'ajout d'une nouvelle ligne dans la table 320 de l'état de connaissances. Cette nouvelle ligne comporte l'identifiant de nœud courant ainsi que la valeur associée à la relation ayant permis d'aboutir au nœud courant.

On passe alors à une étape 540 de détermination du nœud suivant. Dans cette étape on analyse chaque nœud voisin du nœud courant pour lui associer un score. Un nœud voisin du nœud courant est un nœud qui établit une relation avec le nœud courant et qui comporte un attribut de navigation. Dans l'exemple de la description il s'agit du troisième nœud et du quatrième nœud. On calcule 541 le score de chaque nœud voisin.

Le calcul d'un score d'un nœud se fait comme suit :
- Pour chaque structure 221 de référence de l'attribut de navigation, calcul d'un score de structure :
   - Pour chaque ligne de la table 2213 de références :
      - Calcul d'un score de ligne dépendant du coefficient 22131 de la ligne et de la valeur associée à l'identifiant 22132 de la ligne dans l'état de connaissances. Si l'identifiant n'est pas dans l'état de connaissances alors la ligne est ignorée pour le calcul du score de ligne ;
      - Agrégation de scores de ligne, par exemple par une somme simple ;
   - Pondération de l'agrégation par le premier coefficient numérique 2212 de la structure de référence pour obtenir le score de structure.
- Agrégation des scores de structure pour obtenir un score de nœud. Cette agrégation est, par exemple, une somme ou la sélection du score le plus élevé. Le résultat de l'agrégation est le score du nœud.

Dans une variante, le nœud comporte un attribut 230 pondérant. Dans cette variante cet attribut est utilisé pour pondérer le score du nœud.

Par pondération, on entend multiplication.

On sélectionne 542 alors le nœud qui a le score le plus élevé. Puis on passe à une étape 543 de sélection du nœud suivant à partir de l'attribut de navigation du nœud suivant. Ce nœud est celui qui :
- N'est pas déjà référencé par l'état de connaissances, et
- Qui a le coefficient de plus élevé dans les tables de références des structures de références de l'attribut de navigation.

Dans une variante, pour l'étape de sélection du nœud suivant, les coefficients sont pondérés par le premier coefficient de la structure de références à laquelle ils appartiennent.

Une fois le nœud sélectionné, on l'utilise comme nouveau nœud courant et on peut reprendre le procédé à l'étape 500 préliminaire.

Le procédé peut s'arrêter sur plusieurs critères selon le mode de réalisation :
- On atteint un nombre prédéterminé de lignes dans l'état de connaissances ;
- Il n'y a plus de nœud voisin qui ne soit pas déjà dans l'état de connaissances.

Les valeurs associées à une relation de type R sont soit numériques, soit associables à une valeur numérique. Si elles sont numériques alors les calculs décrits sont immédiats. Si elles sont associables à une valeur numérique alors il faut, préalablement au calcul, procéder à l'association pour utiliser la valeur associée lors du calcul.

Par exemple si des valeurs associées à une des relations de type R sont :
- « Oui »,
- « Non », ou
- « Je ne sais pas ».

Alors il est possible, dans une variante, de procéder à l'association suivante :
- « Oui » est associé à la valeur 1
- « Non » est associé à la valeur 0,
- « Je ne sais » pas est associé à la valeur 0.5

Dans le même ordre des valeurs associées aux relations on pourrait avoir, à la place des valeurs numériques [1, 0, 0.5] les valeurs numériques [1, -1, 0].

Avec l'invention, l'utilisation de l'attribut de navigation permet d'éviter d'avoir à établir des relations pour établir des liens de navigation entre des nœuds. Si on établissait ces liens, il faudrait émettre des requêtes impliquant des relations vers la base de données pour déterminer le nœud suivant. De ce point de vue l'attribut de navigation peut donc être vu comme un cache de réponse de requête et donc comme une optimisation du parcours du graphe.

L'invention trouve son application au moins dans le domaine médical pour la réalisation d'une anamnèse, et dans le domaine judiciaire pour l'établissement de portraits robots.

Dans le cas d'une anamnèse un attribut navigation peux être structuré comme la liste de listes suivante :
- Première liste de symptômes importants, coefficient 0.8
   - Nœud X1, coefficient 0.8 ;
   - Nœud X2, coefficient 0.7
- Deuxième liste de symptômes, coefficient 0.6
   - Nœud X3, coefficient 0.8
   - Nœud X4, coefficient 0.65
   - Nœud X5, coefficient 0.7
- Troisième liste de coefficient mineurs, coefficient 0.3
   - Nœud X6, coefficient 0.8

Dans le cas de l'anamnèse, une partie des nœuds du graphe sont des entités médicales telles que par exemple des symptômes, des facteurs de risques ou des maladies alors que d'autres nœuds sont des capteurs.

Toujours dans le cas d une anamnèse on peut avoir les nœuds suivants
- Infarctus aigu du myocarde, qui est le père de :
   - Infarctus (aigu) du myocarde sans précision, prise en charge non précisée, qui est le père de :
      - Infarctus (aigu) du myocarde sans précision, prise en charge initiale.

Chacun de ces nœuds comporte un attribut de navigation, par exemple structuré comme précédemment décrit qui permet l'application du procédé selon l'invention.

Dans cet exemple les filiations sont des relations de type V telles que précédemment décrites. Ces relations permettent à l'homme du métier des connaissances du graphe de parcourir naturellement le graphe car le graphe ne contient pas de contrainte de traitement informatique. On note qu'un nœud peut établir plusieurs relations de type V.

## Revendications

1. Procédé mise en oeuvre par ordinateur de parcours d'une base de données organisée comme un graphe de connaissances pour mettre à jour dans une mémoire un état de connaissances, le graphe comportant une pluralité de nœuds et une pluralité de relations entres les nœuds de la pluralité de nœuds, le procédé comprenant les étapes suivantes:
- Un état de connaissances (120.3) est un ensemble de paires [référence à un nœud, valeur] ;
- Au moins un nœud (200) de la pluralité de nœuds comporte un identifiant (210) et un attribut (220) de navigation, ledit attribut de navigation étant structuré comme une liste d'ensembles de références à des nœuds, le procédé étant **caractérisé en ce que**:
chaque ensemble de la liste étant associé à un premier coefficient, chaque nœud référencé étant associé à un deuxième coefficient, la sélection d'un nœud suivant à partir d'un nœud courant se faisant selon les étapes suivantes :
- Mise à jour (530) de l'état de connaissances par l'ajout d'une paire dans l'état de connaissances, ladite paire comprenant une référence du nœud courant et une valeur en fonction d'une relation (R1, R2, R3) ayant permis d'aboutir au nœud courant ;
- Pour chaque nœud voisin (410, 420) du nœud courant (200) comportant un attribut de navigation, calcul (541) d'un score de nœuds basé sur au moins un score d'ensemble, chaque score d'ensemble étant basé sur chaque deuxième coefficient associé à un nœud référencé et sur chaque valeur dans l'état de connaissances associée audit nœud référencé, chaque deuxième coefficient et chaque valeur étant considérée lorsque ledit nœud référencé est présent dans l'état de connaissances, chaque score d'ensemble étant pondéré par le premier coefficient dudit ensemble ;
- Sélection (543), parmi tous les nœuds référencés par le nœud voisin ayant le score le plus élevé, du nœud qui n'est pas référencé par l'état de connaissances et qui a le deuxième coefficient le plus élevé.

2. Procédé mise en oeuvre par ordinateur de parcours d'une base de données selon la revendication 1, **caractérisé en ce que**, pour une référence de nœud les valeurs possibles appartiennent à un ensemble discret.

3. Procédé selon l'une des revendications précédentes, **caractérisé en ce qu'**un nœud comporte un attribut (230) pondérant pris en compte dans le calcul du score du nœud.

4. Procédé selon l'une des revendications précédentes, **caractérisé en ce que** la relation permettant d'aboutir au nœud courant est déterminée par les étapes suivantes :
- Sélection (510) d'une relation prédéterminée parmi des relations sortant du nœud courant pour aboutir à un nœud d'évaluation ;
- Sélection (520) d'une relation sortant du nœud d'évaluation et retournant vers le nœud courant en fonction d'une mesure.

5. Procédé selon la revendication 4, **caractérisé en ce que** la mesure est issue d'un capteur.

6. Procédé selon la revendication 5, **caractérisé en ce que** le capteur est un dispositif de saisie.

7. Procédé selon la revendication 4, **caractérisé en ce que** la mesure est le résultat de l'évaluation d'une fonction de l'état de connaissances.

## Patentansprüche

1. Computerimplementiertes Verfahren zum Durchsuchen einer Datenbank, die als Wissensgraph organisiert ist, um in einem Speicher einen Wissensstand zu aktualisieren, wobei der Graph eine Vielzahl von Knoten und eine Vielzahl von Beziehungen zwischen den Knoten der Vielzahl von Knoten aufweist und das Verfahren die folgenden Schritte umfasst:
- Ein Wissensstand (120.3) ist eine Einheit von Paaren [Knotenreferenz, Wert];
- Mindestens ein Knoten (200) aus der Vielzahl von Knoten hat eine Kennung (210) und ein Navigationsattribut (220), wobei das Navigationsattribut als eine Liste von Referenzeinheiten für Knoten strukturiert ist,
wobei das Verfahren **dadurch gekennzeichnet ist, dass**:
jede Listeneinheit einem ersten Koeffizienten zugeordnet ist, jeder referenzierte Knoten einem zweiten Koeffizienten zugeordnet ist, wobei die Auswahl eines nächsten Knotens ausgehend von einem aktuellen Knoten gemäß den folgenden Schritten erfolgt:
- Aktualisieren (530) des Wissensstands durch Hinzufügen eines Paars zum Wissensstand, wobei das Paar eine Referenz des aktuellen Knotens und einen Wert als Funktion einer Beziehung (R1, R2, R3), die zu dem aktuellen Knoten geführt hat, umfasst;
- Für jeden Nachbarknoten (410, 420) des aktuellen Knotens (200), der ein Navigationsattribut aufweist, Berechnen (541) einer Knotenbewertung auf der Grundlage mindestens einer Einheitenbewertung, wobei jede Einheitenbewertung auf jedem zweiten Koeffizienten, der einem referenzierten Knoten zugeordnet ist, und auf jedem Wert in dem Wissensstand, der dem referenzierten Knoten zugeordnet ist, basiert, wobei jeder zweite Koeffizient und jeder Wert berücksichtigt wird, wenn der referenzierte Knoten in dem Wissensstand vorhanden ist, wobei jede Einheitenbewertung durch den ersten Koeffizienten dieser Einheit gewichtet wird;
- Auswahl (543) des Knotens, der nicht vom Wissensstand referenziert wird und der den zweithöchsten Koeffizienten hat, aus allen Knoten, die vom Nachbarknoten mit der höchsten Punktzahl referenziert werden.

2. Computerimplementiertes Verfahren zum Durchsuchen einer Datenbank nach Anspruch 1, **dadurch gekennzeichnet, dass** für eine Knotenreferenz die möglichen Werte einer diskreten Einheit angehören.

3. Verfahren nach einem der vorhergehenden Ansprüche, **dadurch gekennzeichnet, dass** ein Knoten ein gewichtendes Attribut (230) aufweist, das bei der Berechnung der Punktzahl des Knotens berücksichtigt wird.

4. Verfahren nach einem der vorhergehenden Ansprüche, **dadurch gekennzeichnet, dass** die Beziehung, die zum aktuellen Knoten führt, durch die folgenden Schritte bestimmt wird:
- Auswählen (510) einer vorbestimmten Beziehung aus Beziehungen, die vom aktuellen Knoten ausgehen, um zu einem Bewertungsknoten zu führen;
- Auswahl (520) einer Beziehung, die vom Bewertungsknoten ausgeht und zum aktuellen Knoten zurückführt, in Abhängigkeit einer Messung.

5. Verfahren nach Anspruch 4, **dadurch gekennzeichnet, dass** die Messung aus einem Messwertaufnehmer hervorgeht.

6. Verfahren nach Anspruch 5, **dadurch gekennzeichnet, dass** der Messwertaufnehmer eine Eingabevorrichtung ist.

7. Verfahren nach Anspruch 4, **dadurch gekennzeichnet, dass** die Messung das Ergebnis der Bewertung einer Funktion des Wissensstandes ist.

## Claims

1. A computer implemented method for scrolling through a database organised as a knowledge graph to update a knowledge state in a memory, the graph including a plurality of nodes and a plurality of relationships between nodes of the plurality of nodes, the method comprising the following steps:
- A knowledge state (120.3) is a set of [node reference, value] pairs;
- at least one node (200) of the plurality of nodes includes an identifier (210) and a browsing attribute (220), said browsing attribute being structured as a list of sets of references to nodes,
the method being **characterised in that**:
each set of the list being associated with a first coefficient, each referenced node being associated with a second coefficient, selecting a next node from a current node being carried out according to the following steps of:
- Updating (530) the knowledge state by adding a pair to the knowledge state, said pair comprising a reference of the current node and a value as a function of a relationship (R1, R2, R3) that led to the current node;
- For each neighbouring node (410, 420) of the current node (200) including a browsing attribute, calculating (541) a node score based on at least one set score, each set score being based on each second coefficient associated with a referenced node and on each value in the knowledge state associated with said referenced node, each second coefficient and each value being considered when said referenced node is present in the knowledge state, each set score being weighted by the first coefficient of said set;
- Selecting (543), from all the nodes referenced by the neighbouring node having the highest score, the node which is not referenced by the knowledge state and which has the second highest coefficient.

2. The computer implemented method for scrolling through a database according to claim 1, **characterised in that**, for a node reference, the possible values belong to a discrete set.

3. The method according to one of the preceding claims, **characterised in that** a node includes a weighting attribute (230) taken into account in calculating the score of the node.

4. The method according to one of the preceding claims, **characterised in that** the relationship for leading to the current node is determined by the following steps:
- Selecting (510) a predetermined relationship from among relationships leaving the current node to lead to an evaluation node;
- Selecting (520) a relationship leaving the evaluation node and returning to the current node as a function of a measurement.

5. The method according to claim 4, **characterised in that** the measurement is derived from a sensor.

6. The method according to claim 5, **characterised in that** the sensor is an input device.

7. The method according to claim 4, **characterised in that** the measurement is the evaluation result of a function of the knowledge state.
